# FASCICULE DE BREVET EUROPEEN

(11) **EP 2 493 749 B1**
(45) Date de publication et mention de la délivrance du brevet: **21.05.2014**
(21) Numéro de dépôt: 10787843.1
(22) Date de dépôt: 25.10.2010
(51) Int. Cl.: B62D 25/14

(54) **DISPOSITIF DE FIXATION POUR VEHICULE AUTOMOBILE**
BEFESTIGUNGSVORRICHTUNG FÜR EIN KRAFTFAHRZEUG
ATTACHMENT DEVICE FOR A MOTOR VEHICLE

(30) Priorité: 29.10.2009 FR 0957618
(43) Date de publication de la demande: 05.09.2012
(73) Titulaire: Faurecia Intérieur Industrie, 92000 Nanterre (FR)
(72) Inventeur: LACHAUD, Jean-Paul, F-21800 Sennecey Les Dijon (FR); BRANCHERIAU, Christian, F-95220 Herblay (FR)
(74) Mandataire: Jacobson, Claude
(86) Numéro de dépôt international: PCT/FR2010/052278
(87) Numéro de publication internationale: WO 2011/051609

(56) Documents cités:
- FR-A1- 2 907 522

## Description

L'invention concerne en général les dispositifs de fixation pour véhicule automobile, et notamment les dispositifs de fixation d'une planche de bord sur la caisse d'un véhicule.

Plus précisément, l'invention concerne selon un premier aspect un dispositif de fixation d'un premier sous-ensemble sur un second sous-ensemble d'un véhicule automobile, du type comprenant :
- un premier organe lié au premier sous-ensemble ;
- un second organe lié au second sous-ensemble, mobile par rapport au premier organe entre une position écartée et une position verrouillée ;
- un organe de blocage mobile par rapport au second organe entre une position d'attente dans laquelle l'organe de blocage autorise un déplacement du second organe par rapport au premier entre sa position écartée et sa position verrouillée, et une position active dans laquelle l'organe de blocage bloque le second organe par rapport au premier organe en position verrouillée ;
- un organe élastique sollicitant l'organe de blocage depuis sa position d'attente vers sa position active ;
- un dispositif libérable de retenue, prévu pour adopter un état de retenue de l'organe de blocage en position d'attente ou un état de libération de l'organe de blocage de sa position d'attente, le dispositif de retenue étant prévu pour passer de son état de retenue à son état de libération sous l'effet du déplacement du second organe par rapport au premier organe jusqu'à sa position verrouillée.

Un tel dispositif de fixation est connu de FR 2907522, qui décrit que l'organe de blocage est guidé par deux glissières ménagées dans le premier organe. Le dispositif de retenue comprend deux reliefs ménagés dans les glissières, et des demi-lunes portées par l'organe de blocage et coopérant avec les reliefs pour retenir l'organe de blocage dans sa position d'attente. L'organe de blocage est libéré en faisant pivoter les demi-lunes, de manière à les dégager des reliefs.

Avec un tel dispositif de retenue, on a observé qu'il était difficile de libérer l'organe de blocage de sa position d'attente dans certains cas.

Dans ce contexte, l'invention vise à proposer un dispositif de fixation qui soit encore plus fiable.

A cette fin, l'invention porte sur un dispositif de fixation du type précité, caractérisé en ce que le dispositif de retenue comprend :
- un basculeur comportant une zone de retenue et une zone d'appui ;
- une liaison pivot du basculeur au second organe ;
- un déclencheur comportant une zone de butée et une zone d'actionnement ;
- une liaison pivot du déclencheur au second organe ;
le dispositif de retenue étant prévu pour que, dans son état de retenue, l'organe de blocage porte contre la zone de retenue du basculeur sous l'effet de la sollicitation de l'organe élastique et sollicite la zone d'appui en butée contre la zone de butée du déclencheur, et pour que le premier organe, au cours du déplacement du second organe par rapport au premier organe jusqu'à sa position verrouillée, porte contre la zone d'actionnement du déclencheur et escamote la zone de butée, faisant ainsi passer le dispositif de retenue à son état de libération.

Le dispositif de fixation peut également présenter une ou plusieurs des caractéristiques ci-dessous, considérées individuellement ou selon toutes les combinaisons techniquement possibles :
- la liaison pivot du déclencheur au second organe présente un axe de rotation du déclencheur, la zone d'appui du basculeur dans l'état de retenue étant sollicitée contre la zone de butée du déclencheur suivant une direction de sollicitation passant par l'axe de rotation du déclencheur ;
- la direction de sollicitation est sensiblement parallèle à la direction de déplacement du second organe par rapport au premier organe quand le second organe arrive à sa position verrouillée ;
- le déclencheur comprend au moins un levier ;
- le déclencheur présente une forme allongée, avec une partie centrale liée au second organe par la liaison pivot, et deux parties d'extrémités opposées par rapport à la partie centrale définissant respectivement la zone de butée et la zone d'actionnement ;
- le basculeur comprend au moins un levier ;
- le basculeur présente une forme allongée, avec une partie centrale liée au second organe par la liaison pivot, et deux parties d'extrémités opposées par rapport à la partie centrale définissant respectivement la zone de retenue et la zone d'appui ;
- l'organe de blocage se déplace entre sa position d'attente et sa position active selon un mouvement de translation, de préférence suivant une direction sensiblement perpendiculaire à la direction de déplacement du second organe par rapport au premier organe quand le second organe arrive à sa position verrouillée.
- la zone de butée du déclencheur est une fourchette avec deux nervures définissant entre elles une rainure de réception de la zone d'appui du basculeur ;
- le premier organe comprend une boucle dans laquelle vient s'engager l'organe de blocage en position active, et au moins un bras d'appui prévu pour porter contre la zone d'actionnement du déclencheur ;
- le dispositif de retenue est adapté pour passer de son état de retenue à son état de libération sous l'effet d'un pivotement du déclencheur compris entre 10° et 30°;
- l'organe élastique est adapté pour exercer sur l'organe de blocage un premier effort quand l'organe de blocage est en position d'attente, le dispositif de retenue étant adapté pour passer de son état de retenue à son état de libération sous l'effet d'un second effort appliqué par le premier organe au déclencheur, le premier effort étant compris entre 5 et 15 fois le second effort.

Selon un second aspect, l'invention porte sur un véhicule automobile, avec un élément de structure, une planche de bord et au moins un dispositif de fixation de la planche de bord à l'élément de structure présentant les caractéristiques ci-dessus.

La planche de bord peut comprendre une traverse, le dispositif de fixation fixant une partie de la traverse à l'élément de structure du véhicule.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 est une vue simplifiée, de côté, d'une traverse de planche de bord fixée à la traverse inférieure de baie par un dispositif de fixation conforme à l'invention. ;
- la figure 2 est une vue éclatée du dispositif de fixation de la figure 1 ;
- la figure 3 est une vue en perspective du dispositif de fixation de la figure 2, à l'état assemblé ;
- la figure 4 est une vue de côté, en élévation, d'une partie des éléments du dispositif de fixation de la figure 2, le dispositif de retenue étant dans son état de retenue de l'organe de blocage en position d'attente ;
- la figure 5 est une vue en perspective du dispositif de retenue dans son état de retenue ;
- la figure 6 est une vue de côté, en élévation, du dispositif de fixation, montrant le dispositif de retenue dans son état de libération de l'organe de blocage, l'organe de blocage étant toujours dans sa position d'attente ;
- la figure 7 est une vue similaire à celle de la figure 6, l'organe de blocage étant représenté dans sa position active ;
- la figure 8 est une vue en coupe de la zone d'appui du basculeur coopérant avec la zone de butée du déclencheur ;
- la figure 9 est une vue de côté, agrandie, de la zone d'appui du basculeur au moment de son échappement de la zone de butée ; et
- la figure 10 est une vue similaire à celle de la figure 1, montrant l'organe de blocage escamoté sous l'action de la vis SAV pour désolidariser la traverse de planche de bord de la traverse inférieure de baie.

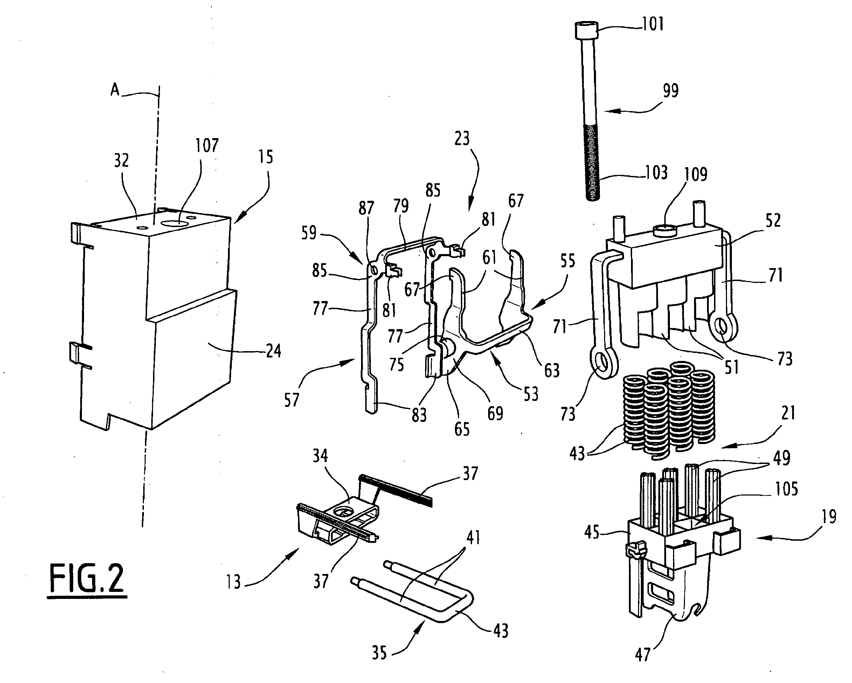

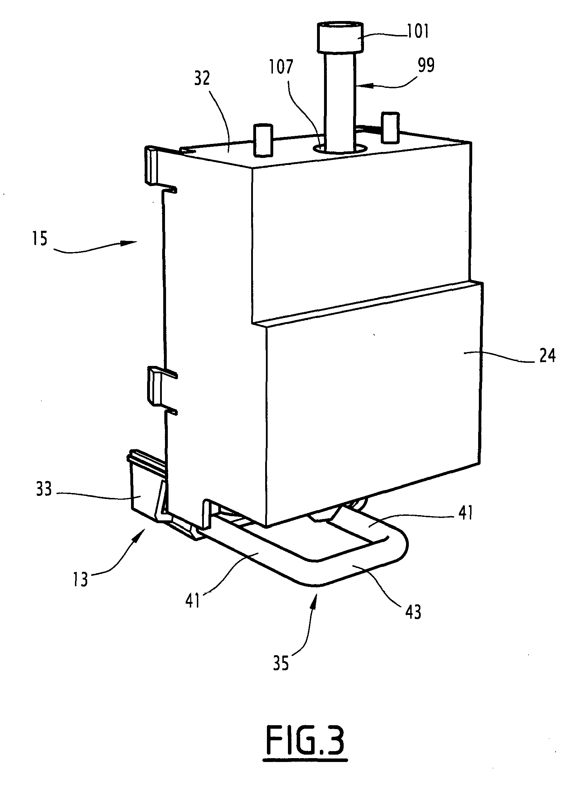

Le dispositif 1 notamment illustré sur les figures 2 et 3 est prévu pour assurer la fixation d'un premier sous-ensemble structurel ou fonctionnel du véhicule sur un second sous-ensemble structurel ou fonctionnel du véhicule. Ainsi, il est par exemple, mais pas exclusivement, adapté à la fixation de la planche de bord sur la caisse du véhicule ou d'un siège sur la caisse du véhicule.

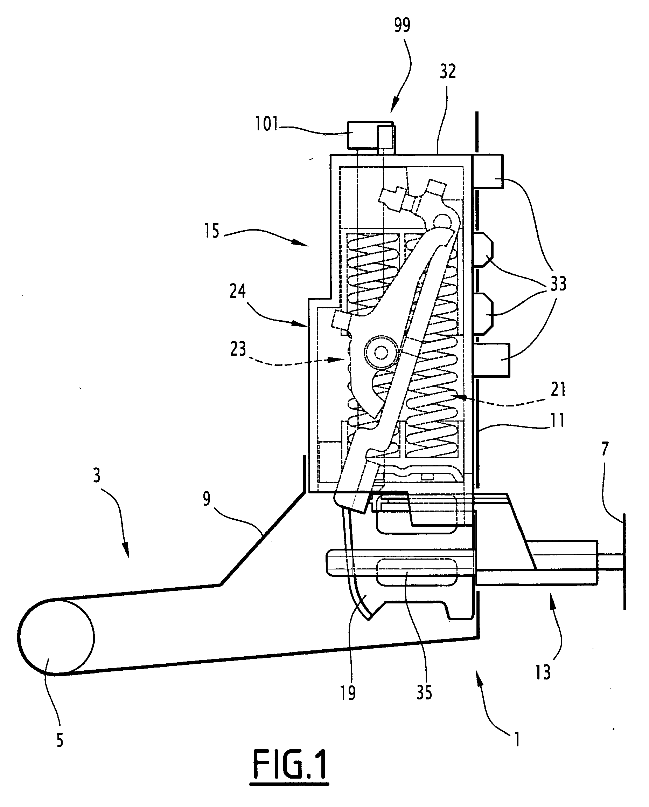

Comme le montre la figure 1, le dispositif de fixation 1 est destiné à fixer rigidement un élément structurel de la planche de bord 3, par exemple la traverse 5 de la planche de bord, à un élément structurel 7 du véhicule.

L'élément structurel du véhicule, que l'on dénommera de façon générique caisse ou partie de caisse, est typiquement une traverse appelée traverse inférieure de baie. La traverse 5 de la planche de bord est munie d'une patte de fixation 9, dite liaison TIB, qui présente une partie d'appui et de fixation 11 tournée vers la partie de caisse 7, et au niveau de laquelle est réalisée la fixation par le dispositif 1. Un seul dispositif de fixation a été représenté sur la figure 1, étant entendu que la traverse 5 est fixée en plusieurs points répartis sur la longueur de la traverse, de préférence en trois points, au moyen de dispositifs de fixation de préférence identiques ou analogues à celui représenté sur les figures 1 à 10.

Les directions longitudinale et transversale, la droite, la gauche, l'avant et l'arrière seront entendus dans la description qui va suivre relativement au sens de déplacement normal du véhicule.

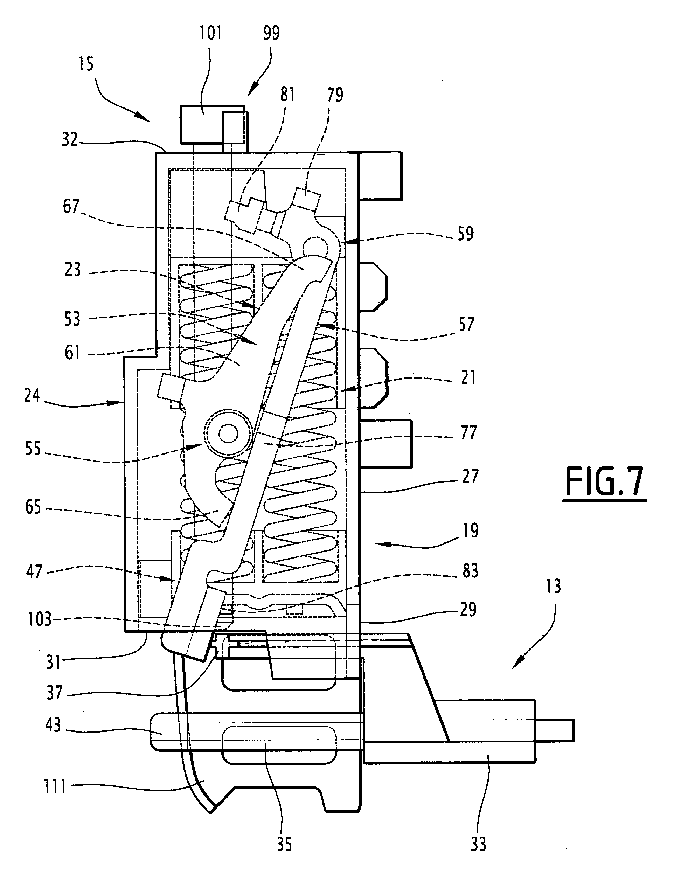

Comme le montre la figure 2, le dispositif de fixation 1 comporte :
- un premier organe 13 prévu pour être fixé à la caisse 7 ;
- un second organe 15 susceptible de se déplacer par rapport au premier organe 13 entre une position écartée et une position verrouillée, la position verrouillée étant représentée par exemple sur la figure 7;
- un organe de blocage 19 mobile par rapport au second organe 15 entre une position d'attente dans laquelle l'organe de blocage 19 autorise le déplacement du second organe 15 par rapport au premier organe 13 entre sa position écartée et sa position verrouillée, et une position active dans laquelle l'organe de blocage bloque le second organe 15 par rapport au premier organe 13 en position verrouillée;
- un organe élastique 21 sollicitant l'organe de blocage 19 depuis sa position d'attente vers sa position active ;
- un dispositif libérable de retenue 23, prévu pour adopter sélectivement un état de retenue de l'organe de blocage 19 en position d'attente ou en état de libération de l'organe de blocage 19 de sa position d'attente, le dispositif de retenue 23 étant prévu pour passer de son état de retenue à son état de libération sous l'effet du déplacement du second organe 15 par rapport au premier organe 13 jusqu'à sa position verrouillée.

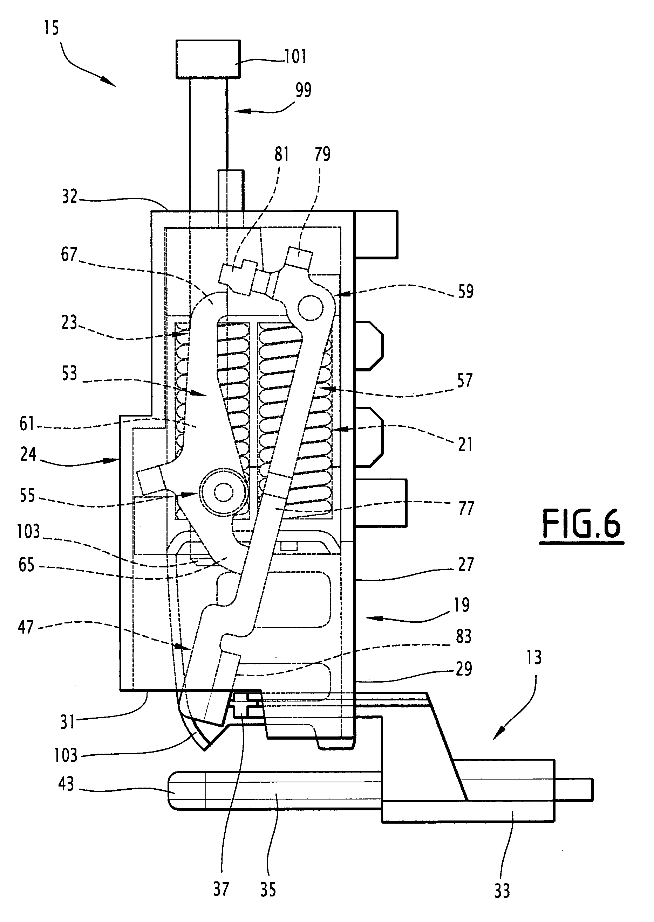

Le second organe 15 comporte une enveloppe externe tubulaire 24, d'axe central A prévu pour être par exemple vertical, et de section par exemple rectangulaire perpendiculairement à son axe. L'enveloppe 24 comporte sur une paroi 27 une ouverture de passage 29 (figure 6) prévue pour être perpendiculaire à la direction de déplacement du second organe 15 jusqu'à sa position verrouillée. Par ailleurs, elle est ouverte à l'une de ses extrémités axiales 31 et fermée à l'autre extrémité axiale par un fond 32.

Le second organe 15 est fixé à la liaison TIB de manière rigide, par exemple par des pattes 33 formées sur l'enveloppe 24 et engagées dans des orifices de la liaison TIB.

Le premier organe 13 comporte une base 34, une boucle 35 sensiblement rectangulaire solidaire de la base 34, et deux bras d'appui 37 également solidaires de la base 34. La base 34 est par exemple fixée à la traverse inférieure de baie 7 par soudage. La boucle 35 comporte deux branches latérales 41 parallèles l'une à l'autre, reliées l'une à l'autre par une branche intermédiaire 43. Les deux doigts d'actionnement 37 sont situés dans un plan sensiblement parallèle à celui de la boucle 35. Ils sont parallèles et sensiblement superposés aux deux branches latérales 41. Les doigts 37 pointent, à partir de la base 34, du même côté que la boucle 35.

L'organe élastique 21 comprend une pluralité de ressorts hélicoïdaux 43, par exemple six ressorts hélicoïdaux.

L'organe de blocage 19 comporte un socle 45, un pêne 47 solidaire du socle 45 et destiné à coopérer avec la boucle 35, et une pluralité de fûts 49 solidaires du socle 45 et destinés à recevoir les ressorts hélicoïdaux 43.

Le socle 45 est de forme rectangulaire, et de section correspondant sensiblement à la section interne de l'enveloppe 24. Le pêne 47 pointe d'un premier côté du socle 45, les fûts 49 d'un côté opposé.

Les fûts 49 sont destinés à être engagés à l'intérieur des ressorts hélicoïdaux 43.

Le dispositif de fixation comporte par ailleurs une pluralité d'enveloppes cylindriques 51, portées par un berceau 52 fixés au fond 32 de l'enveloppe externe du premier organe. Les ressorts hélicoïdaux 43 sont reçus dans les enveloppes 51, et sont ainsi interposés axialement entre les fonds des enveloppes 51 et le socle 45.

Les axes de compression des ressorts hélicoïdaux 43 sont parallèles à l'axe A de l'enveloppe 24.

Le dispositif de retenue 23 comprend :
- un basculeur 53 ;
- une liaison pivot 55 du basculeur 53 au second organe 15 ;
- un déclencheur 57 ;
- une liaison pivot 59 du déclencheur 57 au second organe 15.

Le basculeur 53 comporte deux leviers 61 sensiblement parallèles l'un à l'autre, fixés l'un à l'autre par une entretoise 63. Chaque levier 61 comporte une zone 65 de retenue et une zone 67 d'appui, dont les fonctions seront décrites plus loin.

Dans chaque levier, les zones 65 et 67 sont disposées de part et d'autre d'une zone centrale 69 liée au second organe 15 par la liaison pivot 55.

La liaison pivot 55 comporte deux bras fixes 71 solidaires du berceau 52 et présentant chacun un palier 73. La liaison 55 comporte également deux pivots 75, formés sur les zones centrales 69 des deux leviers et engagés libres en rotation dans les paliers 73. L'axe de pivotement de la liaison pivot 55 est sensiblement perpendiculaire à l'axe A de l'enveloppe 24, et sensiblement perpendiculaire à la direction de déplacement du second organe 15 par rapport au premier organe 13.

Les zones 65 et 67 de chaque levier constituent deux parties d'extrémités opposées du levier correspondant. Elles forment chacune un coude à partir de la zone centrale 69, les deux coudes pointant dans la même direction.

Le déclencheur 57 comporte lui aussi deux leviers 77, sensiblement parallèles l'un à l'autre, et solidarisés l'un à l'autre par l'intermédiaire d'une entretoise 79. Chaque levier 77 comporte une zone de butée 81 et une zone d'actionnement 83, dont les fonctions seront décrites plus bas. Chaque levier 77 comporte en outre une partie centrale 85 liée au second organe 15 par la liaison pivot 59. Les deux parties d'extrémités opposées de chaque levier par rapport à la partie centrale 85 définissent respectivement la zone de butée 81 et la zone d'actionnement 83.

La liaison pivot 59 comporte par exemple un palier cylindrique 87 ménagé dans la zone centrale de chaque levier 7, et un pivot non représenté, ménagé sur l'enveloppe externe 24 du second organe. Les pivots sont engagés libres en rotation dans les paliers 87. La liaison pivot 59 présente un axe de pivotement sensiblement parallèle à celui de la liaison 55.

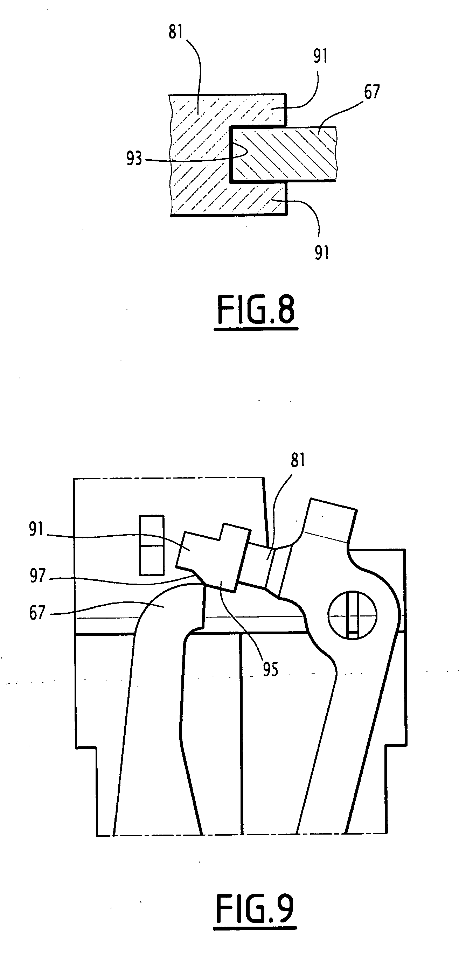

Comme visible sur les figures 8 et 9, chaque zone de butée 81 du déclencheur comporte deux nervures 91 définissant entre elles une rainure 93 de réception de la zone d'appui 67 du basculeur. La rainure 93 s'étend dans un plan perpendiculaire à l'axe de la liaison 59. La rainure 93 est ouverte à ses deux extrémités. Elle est également ouverte à l'opposée du palier 87, pour permettre l'engagement de la zone d'appui 67. La tranche de la zone d'appui 67 vient en appui contre le fond de la rainure 93 quand le dispositif de retenue 23 est dans son état de retenue. Ledit fond et ladite tranche sont alors sensiblement parallèles à l'axe A de l'enveloppe.

Comme visible sur la figure 9, le déclencheur comporte un relief en saillie 95 délimité à l'opposé du palier 87 par une rampe inclinée 97. La rampe inclinée 97 s'étend dans le prolongement du fond de la rainure 93. Plus précisément, elle s'étend à partir d'une extrémité de cette rainure, en oblique vers le palier 87 et vers la zone d'actionnement 83. La rampe 97 constitue une zone d'échappement permettant de guider le mouvement du déclencheur quand la zone de butée s'escamote pour libérer le basculeur.

L'organe de blocage 19, l'organe élastique 21 et le dispositif de retenue 23 sont logés dans l'enveloppe 24 du second organe.

Le dispositif de fixation 1 comporte encore une vis 99 dite SAV, prévue pour escamoter l'organe de blocage 19 de sa position active.

Cette vis 99 est utilisée par exemple en après-vente, quand il est nécessaire de séparer la traverse de planche de bord de la caisse de véhicule.

Comme visible sur ces figures 1 et 2, la vis 99 a une tête 101 située à l'extérieur de l'enveloppe 24 et une extrémité filetée 103 en prise avec un trou taraudé 105 de l'organe de blocage 19. Pour permettre le passage de la vis 99, des orifices 107 et 109 sont ménagés respectivement dans le fond 32 de l'enveloppe 24 et dans le berceau 52. La vis 99 est engagé dans l'un des ressorts de compression 43, et remplace donc l'un des fûts 49 (figure 2). La vis 99 s'étend parallèlement à l'axe A, c'est-à-dire à la direction de déplacement de l'organe de blocage 19.

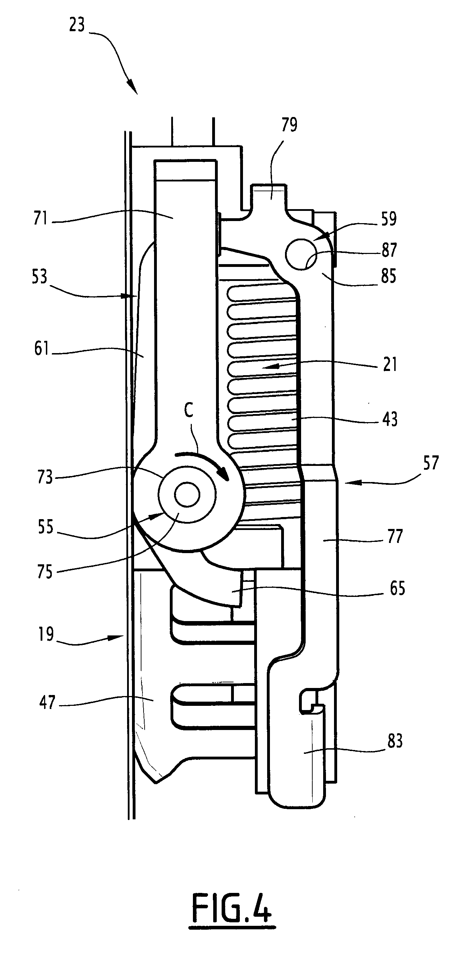

Le fonctionnement du dispositif de fixation va maintenant être détaillé, en référence aux figures 4 à 6.

Sur la figure 4, l'organe de blocage 19 est dans sa position d'attente, et le dispositif de retenue 23 dans son état de retenue de l'organe de blocage 19 dans la position d'attente.

Dans cette situation, l'organe de blocage est décalé axialement vers le fond 32 de l'enveloppe 24. Les ressorts hélicoïdaux 43 sont comprimés et sollicitent l'organe de blocage 19 vers l'extrémité ouverte 31 de l'enveloppe externe 24. Le basculeur 53 est orienté de telle sorte que la zone de retenue 65 de chacun des deux leviers 61 soit interposée sur le chemin de l'organe de blocage 19 depuis sa position d'attente vers sa position active. Ainsi, sous l'effet de la sollicitation des ressorts hélicoïdaux 43, l'organe de blocage 19, et plus précisément le socle 45, vient porter contre la zone de retenue 65 de chacun des leviers. Il est à noter que, comme visible sur la figure 4, chaque zone de retenue 65 est décallée par rapport à l'axe de rotation du basculeur, à la fois dans un plan perpendiculaire à cet axe et dans un plan perpendiculaire à l'axe A de l'enveloppe 24. Ainsi, la sollicitation de l'organe de blocage 19 contre la zone de retenue crée un couple autour de l'axe de la liaison pivot 55. Ce couple est matérialisé par la flèche C de la figure 4, et est en sens horaire dans la représentation de cette figure.

Le déclencheur 57 est orienté de telle sorte que les zones d'actionnement 83 de chacun des leviers soient situées en regard de l'ouverture 29 de passage du second organe.

Par ailleurs, les zones d'appui 67 du basculeur sont en butée chacune contre l'une des zones de butée 81 du déclencheur. Comme indiqué précédemment, l'organe de blocage 19 porte contre les zones de retenue 65 du basculeur sous l'effet de la sollicitation de l'organe élastique 21. Cette sollicitation s'effectue suivant l'axe de l'enveloppe 24.

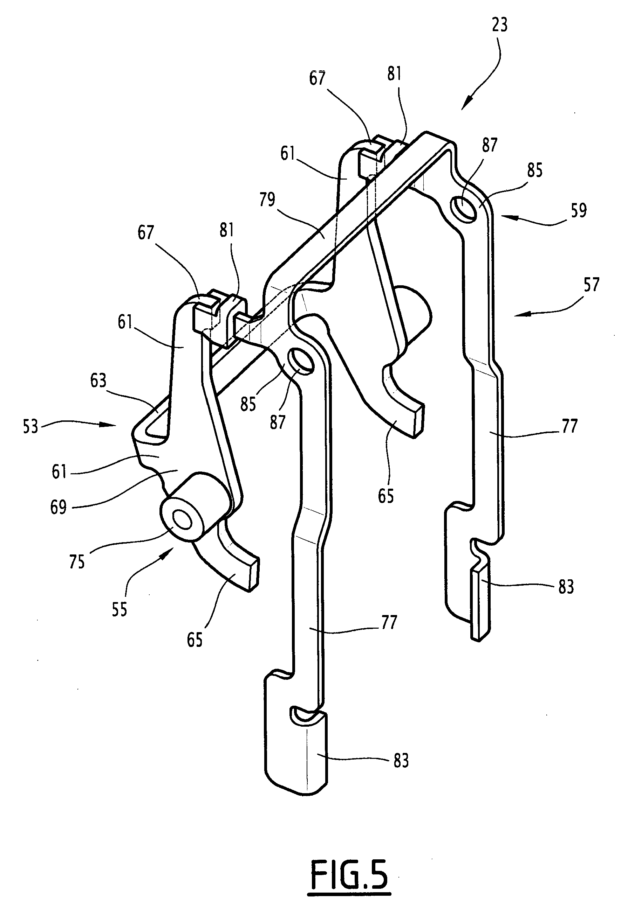

Sous l'effet de cette sollicitation, le basculeur est soumis à un couple autour de l'axe de la liaison pivot 55. Ce couple se traduit par le fait que les zones d'appui 67 sont sollicitées contre les zones de butée 81. Chaque zone d'appui 67, comme visible sur la figure 5, est sollicitée contre la zone de butée correspondante du déclencheur suivant une direction de sollicitation passant par l'axe de rotation du déclencheur, c'est-à-dire par l'axe de rotation de la liaison pivot 59.

De ce fait, le basculeur est bloqué en rotation autour de l'axe de la liaison pivot 55.

Quand le second organe 15 arrive à sa position verrouillée, comme illustré sur la figure 6, les bras 37 viennent en appui contre les zones d'actionnement 83 du déclencheur. Ces zones d'actionnement sont entraînées suivant la direction de déplacement de l'organe 15, provoquant la rotation du déclencheur autour de l'axe de la liaison pivot 59. Dans la représentation de la figure 6, cette rotation est en sens horaire.

Ceci a pour effet de déplacer les zones de butée 81 du déclencheur vers le haut de la figure 6. Ainsi, les zones de butée sont escamotées, de telle sorte que les zones d'appui 67 du basculeur ne sont plus en butée contre les zones de butée 81. Le dispositif de retenue est alors dans son état de libération.

En effet, comme visible sur la figure 9, lors du pivotement du déclencheur sous l'effet de la sollicitation des bras 37, le fond de chaque rainure 93 coulisse d'abord au contact de la zone d'appui 67 correspondante, entraînant le basculeur légèrement en rotation à l'encontre du couple appliqué par l'organe de blocage. Quand la zone d'appui 67 est sortie de la rainure 93, l'extrémité de la zone d'appui 67 vient en butée sur la rampe oblique 97, prolongeant le blocage du basculeur.

Quand la rotation du déclencheur sous l'effet du déplacement du second organe par rapport au premier organe est suffisamment prononcée pour que chaque zone d'appui 67 échappe à la rampe oblique 97 correspondante, le couple appliqué par l'organe de blocage 19 sur le basculeur provoque le basculement de celui-ci autour de l'axe de la liaison pivot 55. La course du basculeur autour de l'axe de la liaison pivot 55 est limitée par les deux leviers 61 de ce basculeur venant porter contre les leviers 77 du déclencheur. Dans cette situation, représentée sur la figure 7, les leviers 61 du basculeur et les leviers 77 du déclencheur sont sensiblement parallèles les uns aux autres.

Par ailleurs, comme visible sur les figures 6 et 7, une fois le dispositif de retenue dans son état de libération, l'organe de blocage 19 est propulsé par l'organe élastique 21 jusqu'à sa position active. Dans celle-ci, le pêne 47 de l'organe de blocage est engagé dans la boucle 35. Une partie frontale arquée 111 du pêne porte alors contre la branche intermédiaire 43 de la boucle, et sollicite la boucle selon la direction de déplacement du second organe 15 jusqu'à sa position verrouillée.

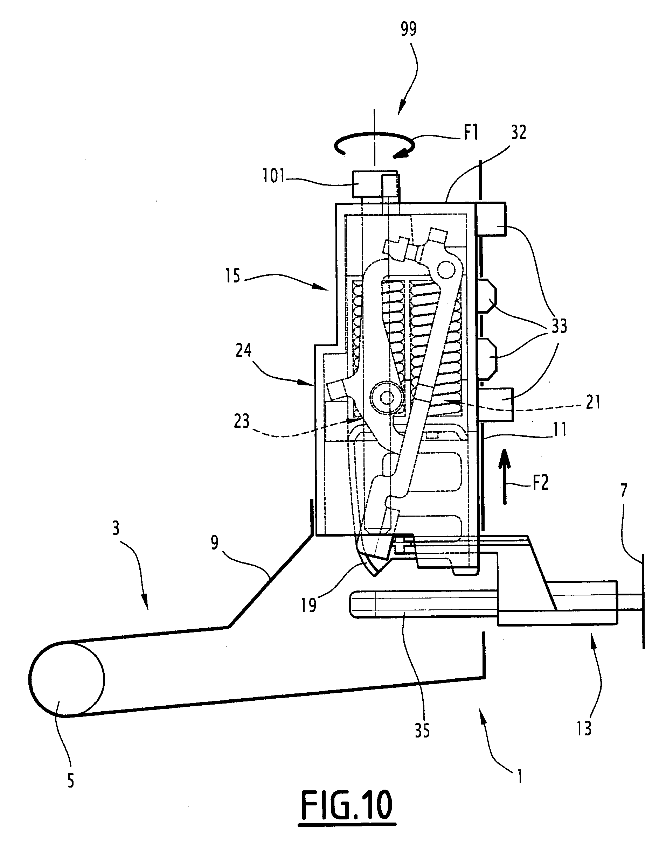

Quand il est nécessaire de désolidariser la traverse de planche de bord 5 de la caisse 7, en après-vente par exemple, un opérateur fait tourner la vis 99 dans le sens représenté sur la figure 10 (flèche F1). Ce sens de rotation correspond à un vissage. Sous l'effet de la rotation de la vis 99, l'organe de blocage se déplace le long de la vis 99 vers la tête 101, par coopération du taraudage du trou 105 avec le filetage de la vis 99. Le sens de déplacement de l'organe de blocage 19 est matérialisé par la flèche F2 de la figure 10.

Le déplacement de l'organe de blocage 19 libère la boucle 35 quand celle-ci n'est plus en prise avec le pêne 47.

Le dispositif de fixation décrit ci-dessus présente de multiples avantages.

Du fait que le dispositif de retenue comprend un basculeur pivotant et un déclencheur pivotant, le déclenchement est particulièrement fiable.

Le déclenchement est obtenu sous l'effet d'un effort réduit appliqué par le premier organe sur le déclencheur au moment où le second organe arrive à sa position verrouillée. Typiquement, l'effort à appliquer sur le basculeur pour faire passer le dispositif de retenue à son état de libération vaut 1/10^{ème} de l'effort appliqué à l'organe de blocage par l'organe élastique quand l'organe de blocage quitte sa position d'attente.

Le dispositif de retenue est libéré pour une faible course angulaire du déclencheur. Cette course est comprise entre 10 et 30 °, typiquement comprise entre 15 et 20 °, et vaut par exemple entre 15 et 18°.

Le dispositif de retenue est simple mécaniquement, et donc peu coûteux.

Il est facile d'adapter le dispositif de retenue en fonction des performances recherchées. On peut jouer pour cela sur la course angulaire du déclencheur permettant de libérer le dispositif de retenue, sur la position des pivots, sur la longueur des leviers, sur la force de sollicitation de l'organe élastique, etc.

La mise en butée du basculeur est particulièrement facile à obtenir et particulièrement fiable du fait que la zone d'appui de ce basculeur dans l'état de retenue du dispositif de retenue est sollicitée contre la zone de butée du déclencheur suivant une direction passant par l'axe de rotation du déclencheur.

L'utilisation de leviers dans le déclencheur et le basculeur rend le dispositif de retenue particulièrement simple et compact.

Le dispositif de fixation décrit ci-dessus peut présenter de multiples variantes.

Le premier organe peut être lié à la traverse de la planche de bord, et le second organe à la caisse.

L'organe élastique n'est pas nécessairement composé de ressorts hélicoïdaux, mais peut comprendre un ou plusieurs ressorts en spirale, ou tout autre type de ressort adapté.

L'organe de blocage ne se déplace pas nécessairement selon un mouvement de translation. Il pourrait se déplacer en rotation, ou selon un mouvement composé de translations et de rotations.

Le déclencheur et le basculeur peuvent présenter toutes sortes de formes, et ne sont pas nécessairement des leviers. Le basculeur et le déclencheur peuvent être des plaques ayant toutes sortes de géométries, ou des pièces ayant une épaisseur.

## Revendications

1. Dispositif de fixation d'un premier sous-ensemble sur un second sous-ensemble d'un véhicule automobile, le dispositif de fixation (1) comprenant :
- un premier organe (13) lié au premier sous-ensemble ;
- un second organe (15) lié au second sous-ensemble, mobile par rapport au premier organe (13) entre une position écartée du premier organe (13) et une position verrouillée ;
- un organe de blocage (19) mobile par rapport au second organe (15) entre une position d'attente dans laquelle l'organe de blocage (19) autorise un déplacement du second organe (15) par rapport au premier organe (13) entre sa position écartée et sa position verrouillée, et une position active dans laquelle l'organe de blocage (19) bloque le second organe (15) par rapport au premier organe (13) en position verrouillée;
- un organe élastique (21) sollicitant l'organe de blocage (19) depuis sa position d'attente vers sa position active ;
- un dispositif libérable de retenue (23), prévu pour adopter un état de retenue de l'organe de blocage (19) en position d'attente ou un état de libération de l'organe de blocage (19) de sa position d'attente, le dispositif de retenue (23) étant prévu pour passer de son état de retenue à son état de libération sous l'effet du déplacement du second organe (15) par rapport au premier organe (13) jusqu'à sa position verrouillée;
**caractérisé en ce que** le dispositif de retenue (23) comprend :
- un basculeur (53) comportant une zone de retenue (65) et une zone d'appui (67);
- une liaison pivot (55) du basculeur (53) au second organe (15);
- un déclencheur (57) comportant une zone de butée (81) et une zone d'actionnement (83) ;
- une liaison pivot (59) du déclencheur (57) au second organe (15),
le dispositif de retenue (23) étant prévu pour que, dans son état de retenue, l'organe de blocage (19) porte contre la zone de retenue (65) du basculeur (53) sous l'effet de la sollicitation de l'organe élastique (21) et sollicite la zone d'appui (67) en butée contre la zone de butée (81) du déclencheur (57), et pour que le premier organe (13), au cours du déplacement du second organe (15) par rapport au premier organe (13) jusqu'à sa position verrouillée, porte contre la zone d'actionnement (83) du déclencheur (57) et escamote la zone de butée (81), faisant ainsi passer le dispositif de retenue (23) à son état de libération.

2. Dispositif selon la revendication 1, **caractérisé en ce que** la liaison pivot (55) du déclencheur (57) au second organe (15) présente un axe de rotation du déclencheur (57), la zone d'appui (67) du basculeur (53) dans l'état de retenue étant sollicitée contre la zone de butée (81) du déclencheur (57) suivant une direction de sollicitation passant par l'axe de rotation du déclencheur (57).

3. Dispositif selon la revendication 2, **caractérisé en ce que** la direction de sollicitation est sensiblement parallèle à la direction de déplacement du second organe (15) par rapport au premier organe (13) quand le second organe (15) arrive à sa position verrouillée.

4. Dispositif selon l'une quelconque des revendications précédentes, **caractérisé en ce que** le déclencheur (57) comprend au moins un levier (77).

5. Dispositif selon l'une quelconque des revendications précédentes, **caractérisé en ce que** le déclencheur (57) présente une forme allongée, avec une partie centrale (85) liée au second organe (15) par la liaison pivot (55), et deux parties d'extrémités opposées par rapport à la partie centrale (85) définissant respectivement la zone de butée (81) et la zone d'actionnement (83).

6. Dispositif selon l'une quelconque des revendications précédentes, **caractérisé en ce que** le basculeur (53) comprend au moins un levier (61).

7. Dispositif selon l'une quelconque des revendications précédentes, **caractérisé en ce que** le basculeur (53) présente une forme allongée, avec une partie centrale (69) liée au second organe (15) par la liaison pivot (55), et deux parties d'extrémités opposées par rapport à la partie centrale (69) définissant respectivement la zone de retenue (65) et la zone d'appui (67).

8. Dispositif selon l'une quelconque des revendications précédentes, **caractérisé en ce que** l'organe de blocage (19) se déplace entre sa position d'attente et sa position active selon un mouvement de translation, de préférence suivant une direction sensiblement perpendiculaire à la direction de déplacement du second organe (15) par rapport au premier organe (13) quand le second organe (15) arrive à sa position verrouillée.

9. Dispositif selon l'une quelconque des revendications précédentes, **caractérisé en ce que** la zone de butée (81) du déclencheur (57) est une fourchette avec deux nervures (91) définissant entre elles une rainure (93) de réception de la zone d'appui (67) du basculeur (53).

10. Dispositif selon l'une quelconque des revendications précédentes, **caractérisé en ce que** le premier organe (13) comprend une boucle (35) dans laquelle vient s'engager l'organe de blocage (19) en position active, et au moins un bras d'appui (37) prévu pour porter contre la zone d'actionnement (83) du déclencheur (57).

11. Dispositif selon l'une quelconque des revendications précédentes, **caractérisé en ce que** le dispositif de retenue (23) est adapté pour passer de son état de retenue à son état de libération sous l'effet d'un pivotement du déclencheur (57) compris entre 10° et 30°.

12. Dispositif selon l'une quelconque des revendications précédentes, **caractérisé en ce que** l'organe élastique (21) est adapté pour exercer sur l'organe de blocage (19) un premier effort quand l'organe de blocage (19) est en position d'attente, le dispositif de retenue (23) étant adapté pour passer de son état de retenue à son état de libération sous l'effet d'un second effort appliqué par le premier organe (13) au déclencheur (57), le premier effort étant compris entre 5 et 15 fois le second effort.

13. Véhicule automobile, avec un élément de structure (7), une planche de bord (3) et au moins un dispositif (1) selon l'une quelconque des revendications précédentes de fixation de la planche de bord (3) à l'élément de structure (7).

14. Véhicule automobile selon la revendication 13, **caractérisé en ce que** la planche de bord (3) comprend une traverse (5), le dispositif de fixation (1) fixant une partie de la traverse (5) à l'élément de structure (7) du véhicule.

## Patentansprüche

1. Vorrichtung zum Fixieren einer ersten Unterbaugruppe an einer zweiten Unterbaugruppe eines Automobil-Fahrzeugs, wobei die Vorrichtung zum Fixieren (1) aufweist:
- ein erstes Organ (13), welches mit der ersten Unterbaugruppe verbunden ist,
- ein zweites Organ (15), welches mit der zweiten Unterbaugruppe verbunden ist und welches relativ zu dem ersten Organ (13) zwischen einer Position abgerückt von dem ersten Organ (13) und einer Verriegelungsposition bewegbar ist,
- einem Blockier-Organ (19), welches relativ zu dem zweiten Organ (15) bewegbar ist zwischen einer Bereitschaftsposition, in welcher das Blockier-Organ (19) eine Verlagerung des zweiten Organs (15) relativ zu dem ersten Organ (13) zwischen dessen Abgerückt-Position und dessen Verriegelungsposition erlaubt, und einer Aktiv-Position bewegbar ist, in welcher das Blockier-Organ (19) das zweite Organ (15) relativ zu dem ersten Organ (13) in einer Verriegelungsposition blockiert,
- ein elastisches Organ (21), welches das Blockier-Organ (19) von seiner Bereitschaftsposition aus in Richtung zu seiner Aktiv-Position hin vorspannt,
- eine freigebbare Rückhaltevorrichtung (23), welche dazu eingerichtet ist, um einen Zustand des Rückhaltens des Blockier-Organs (19) in Bereitschaftsposition oder einen Zustand der Freigabe des Blockier-Organs (19) von dessen Bereitschaftsposition anzunehmen, wobei die Rückhaltevorrichtung (23) eingerichtet ist zum Passieren von ihrem Rückhaltezustand zu ihrem Freigabezustand durch die Wirkung der Verlagerung des zweiten Organs (15) relativ zu dem ersten Organ (13) bis zu dessen Verriegelungsposition, **dadurch gekennzeichnet, dass** die Rückhaltevorrichtung (23) aufweist:
- ein Kippglied (53), welches einen Rückhalteabschnitt (65) und einen Abstützabschnitt (67) aufweist,
- eine Drehzapfenverbindung (55) des Kippglieds (53) an das zweite Organ (15),
- einen Auslöser (57), der einen Anschlagabschnitt (81) und einen Betätigungsabschnitt (83) aufweist,
- eine Drehzapfenverbindung (59) des Auslösers (57) mit dem zweiten Organ (15),
wobei die Rückhaltevorrichtung (23) eingerichtet ist damit, in ihrem Rückhaltezustand, das Blockier-Organ (19) gegen den Rückhalteabschnitt (65) des Kippglieds (53) trägt durch die Wirkung der Vorspannung des elastischen Organs (21) und den Abstützabschnitt (67) vorspannt in Anschlag gegen den Anschlagabschnitt (81) des Auslösers (57), und damit das erste Organ (13), im Rahmen der Verlagerung des zweiten Organs (15) relativ zu dem ersten Organ (13) bis zu dessen Verriegelungsposition, gegen den Betätigungsabschnitt (83) des Auslösers (57) trägt und den Anschlagabschnitt (81) abrückt unter dadurch Passieren lassen der Rückhaltevorrichtung (23) in deren Freigabezustand.

2. Vorrichtung gemäß Anspruch 1, **dadurch gekennzeichnet, dass** die Drehzapfenverbindung (55) des Auslösers (57) an das zweite Organ (15) eine Rotationachse des Auslösers (57) aufweist, wobei der Abstützabschnitt (67) des Kippglieds (53) im Rückhaltezustand gegen den Anschlagabschnitt (81) des Auslösers (57) vorgespannt ist entlang einer Vorspannrichtung, welche durch die Rotationsachse des Auslösers (57) passiert.

3. Vorrichtung gemäß Anspruch 2, **dadurch gekennzeichnet, dass** die Vorspannrichtung im Wesentlichen parallel zu der Richtung der Verlagerung des zweiten Organs (15) relativ zu dem ersten Organ (13) ist, wenn das zweite Organ (15) in seiner Verriegelungsposition ankommt.

4. Vorrichtung gemäß irgendeinem der vorhergehenden Ansprüche, **dadurch gekennzeichnet, dass** der Auslöser (57) wenigstens einen Hebel (77) aufweist.

5. Vorrichtung gemäß irgendeinem der vorhergehenden Ansprüche, **dadurch gekennzeichnet, dass** der Auslöser (57) eine langgestreckte Form hat, mit einem mittleren Abschnitt (85), der über die Drehzapfenverbindung (55) mit dem zweiten Organ (15) verbunden ist, und zwei Endabschnitten, die bezüglich des mittleren Abschnitts (85) entgegengesetzt angeordnet sind und jeweilig den Anschlagabschnitt (81) und den Betätigungsabschnitt (83) definieren.

6. Vorrichtung gemäß irgendeinem der vorhergehenden Ansprüche, **dadurch gekennzeichnet**, das Kippglied (53) wenigstens einen Hebel (61) aufweist.

7. Vorrichtung gemäß irgendeinem der vorhergehenden Ansprüche, **dadurch gekennzeichnet, dass** das Kippglied (53) eine langgestreckte Gestalt hat, mit einem mittleren Abschnitt (69), der über die Drehzapfenverbindung (55) mit dem zweiten Organ (15) verbunden ist, und zwei Endabschnitten, die bezüglich des mittleren Abschnitts (69) entgegengesetzt angeordnet sind und jeweilig den Rückhalteabschnitt (65) und den Abstützabschnitt (67) definieren.

8. Vorrichtung gemäß irgendeinem der vorhergehenden Ansprüche, **dadurch gekennzeichnet, dass** das Blockier-Organ (19) sich zwischen seiner Bereitschaftsposition und seiner Aktiv-Position gemäß einer translatorischen Bewegung verlagert, bevorzugt entlang einer Richtung, die im Wesentlichen senkrecht ist zu der Richtung der Verlagerung des zweiten Organs (15) relativ zu dem ersten Organ (13), wenn das zweite Organ (15) in seiner Verriegelungsposition ankommt.

9. Vorrichtung gemäß irgendeinem der vorhergehenden Ansprüche, **dadurch gekennzeichnet, dass** der Anschlagabschnitt (81) des Auslösers (57) eine Gabel mit zwei Schenkeln (91) ist, die zwischen sich eine Nut (93) definieren zum Aufnehmen des Abstützabschnitts (67) des Kippglieds (53).

10. Vorrichtung gemäß irgendeinem der vorhergehenden Ansprüche, **dadurch gekennzeichnet, dass** das erste Organ (13) aufweist einen Bügel (35), in welchen das Blockier-Organ (1) in der Aktiv-Position in Eingriff kommt, und wenigstens einen Stützarm (37), der eingerichtet ist zum Tragen gegen den Betätigungsabschnitt (83) des Auslösers (57).

11. Vorrichtung gemäß irgendeinem der vorhergehenden Ansprüche, **dadurch gekennzeichnet, dass** die Rückhaltevorrichtung (23) angepasst ist zum Passieren von ihrem Rückhaltezustand in ihren Freigabezustand durch die Wirkung einer Schwenkbewegung des Auslösers (57), die zwischen 10° und 30° liegt.

12. Vorrichtung gemäß irgendeinem der vorhergehenden Ansprüche, **dadurch gekennzeichnet, dass** das elastische Organ (21) angepasst ist zum Ausüben einer ersten Kraft auf das Blockier-Organ (19), wenn das Blockier-Organ (19) in einer Bereitschaftsposition ist, wobei die Rückhaltevorrichtung (23) angepasst ist zum Passieren von ihrem Rückhaltezustand aus zu ihrem Freigabezustand durch die Wirkung einer zweiten Kraft, die von dem ersten Organ (13) auf das Kippglied (57) ausgeübt wird, wobei die erste Kraft zwischen dem 5- und 15-fachen der zweiten Kraft liegt.

13. Automobil-Fahrzeug, mit einem Strukturelement (7), einem Armaturenpaneel (3) und wenigstens einer Vorrichtung (1) gemäß irgendeinem der vorhergehenden Ansprüche zum Fixieren des Armaturenpaneels (3) an dem Strukturelement (7).

14. Automobil-Fahrzeug gemäß Anspruch 13, **dadurch gekennzeichnet, dass** das Armaturenpaneel (3) eine Traverse (5) aufweist, wobei die Vorrichtung zum Fixieren (1) einen Abschnitt der Traverse (5) an dem Strukturelement (7) des Fahrzeugs fixiert.

## Claims

1. Device for affixing a first sub-assembly to a second sub-assembly of an automotive vehicle, which fixing device (1) comprises:
- a first element (13) connected to the first sub-assembly;
- a second element (15) connected to the second sub-assembly, displaceable relative to the first element (13) between a position spaced apart from the first element (13) and a locked position;
- a blocking element (19) displaceable relative to the second element (15) between an inactive position in which the blocking element (19) permits a displacement of the second element (15) relative to the first element (13) between its spaced apart position and its locked position, and an active position in which the blocking element (19) blocks the second element (15) relative to the first element (19) in the locked position;
- an elastic element (21) biasing the blocking element (19) from its inactive position into its active position;
- a releasable retaining device (23) designed to assume a state in which it retains the blocking element (19) in the inactive position or a state in which it releases the blocking element (19) from its inactive position, the retaining device (23) being designed to switch from its retaining state into its releasing state under the effect of the displacement of the second element (15) relative to the first element (13) into its locked position; **characterised in that** the retaining device (23) comprises:
- a rocker (53) having a retaining zone (65) and a support zone (67);
- a pin (55) providing a linkage for the rocker (53) to the second element (15);
- a trip (57) having a stop zone (81) and an activation zone (83);
- a pin (59) providing a linkage for the trip (57) to the second element (15),
the retaining device (23) being designed so that, in its retaining state, the blocking element (19) bears against the retaining zone (65) of the rocker (53) under the effect of the biasing action of the elastic element (21) and biases the support zone (67) into abutment with the stop zone (81) of the trip (57), and so that, as the second element (15) is being displaced relative to the first element (13) into its locked position, the first element (13) bears against the activation zone (83) of the trip (57) and is moved away from the stop zone (81), thereby causing the retaining device (23) to move into its releasing state.

2. Device as claimed in claim 1, **characterised in that** the pin linkage (55) of the trip (57) to the second element (15) constitutes an axis of rotation for the trip (57), the support zone (67) of the rocker (53) in the retained state being biased against the stop zone (81) of the trip (57) in a biasing direction extending through the axis of rotation of the trip (57).

3. Device as claimed in claim 2, **characterised in that** the biasing direction is substantially parallel with the direction in which the second element (15) is displaced relative to the first element (13) when the second element (15) reaches its locked position.

4. Device as claimed in any one of the preceding claims, **characterised in that** the trip (57) comprises at least one lever (77).

5. Device as claimed in any one of the preceding claims, **characterised in that** the trip (57) has an elongate shape with a central part (85) connected to the second element (15) by the pin linkage (55), and two opposite end parts relative to the central part (85) defining the stop zone (81) and activation zone (83) respectively.

6. Device as claimed in any one of the preceding claims, **characterised in that** the rocker (53) comprises at least one lever (61).

7. Device as claimed in any one of the preceding claims, **characterised in that** the rocker (53) has an elongate shape with a central part (69) connected to the second element (15) by the pin linkage (55), and two opposite end parts relative to the central part (69) defining the retaining zone (65) and support zone (67) respectively.

8. Device as claimed in any one of the preceding claims, **characterised in that** the blocking element (19) moves between its inactive position and its active position in a translating movement, preferably in a direction substantially perpendicular to the direction of displacement of the second element (15) relative to the first element (13) when the second element (15) reaches its locked position.

9. Device as claimed in any one of the preceding claims, **characterised in that** the stop zone (81) of the trip (57) is a fork with two ribs (91) defining between them a groove (93) for receiving the support zone (67) of the rocker (53) .

10. Device as claimed in any one of the preceding claims, **characterised in that** the first element (13) comprises a loop (35) into which the blocking element (19) moves and locates in the active position, and at least one support arm (37) designed to bear against the activation zone (83) of the trip (57).

11. Device as claimed in any one of the preceding claims, **characterised in that** the retaining device (23) is designed to switch from its retaining state to its releasing state under the effect of a pivoting movement of the trip (57) of between 10° and 30°.

12. Device as claimed in any one of the preceding claims, **characterised in that** the elastic element (21) is designed to exert a first force on the blocking element (19) when the blocking element (19) is in the inactive position, the retaining device (23) being designed to switch from its retaining state to its releasing state under the effect of a second force applied by the first element (13) to the trip (57), the first force being between 5 and 15 times the second force.

13. Automotive vehicle with a structural element (7), a dashboard (3) and at least one device (1) as claimed in any one of the preceding claims, for affixing the dashboard (3) to the structural element (7).

14. Automotive vehicle as claimed in claim 13, **characterised in that** the dashboard (3) comprises a cross-member (5) and the fixing device (1) affixes a part of the cross-member (5) to the structural element (7) of the vehicle.
